# EUROPEAN PATENT APPLICATION

(11) **EP 1 669 124 A1**
(43) Date of publication of application: **14.06.2006**
(21) Application number: 05257587.5
(22) Date of filing: 09.12.2005
(51) Int. Cl.: B01D 46/24

(54) **Filter elements for filter**

(30) Priority: 10.12.2004 JP 2004358449
(71) Applicant: Toyota Boshoku Kabushiki Kaisha, Kariya-shi, Aichi-ken (JP)
(72) Inventor: Maeda, Kunitaka, Kariya-shi Aichi-ken (JP); Sanai, Yoshihisa, Kariya-shi Aichi-ken (JP); Kume, Kouji, Kariya-shi Aichi-ken (JP)
(74) Representative: Pratt, David Martin

(57) **Abstract**

A filter element (10) has an upstream-side filter layer (12) and a downstream-side filter layer (14). The downstream-side filter layer (14) is attached to the upstream-side filter layer (12). The upstream-side filter layer (12) has a coarser mesh than the mesh of the downstream-side filter layer (14). The upstream-side filter layer (12) has a plurality of through-holes (12h) formed therein and extending throughout the thickness of the upstream-side filter layer (12). The plurality of through-holes (12h) allows the filter element (10) to continue to be used when the rest of the upstream-side filter layer (12) is clogged and the downstream-side filter layer

## Description

This application claims priority to Japanese patent application serial number 2004-358449, the contents of which are incorporated herein by reference.

The present invention relates to filtering elements for filters and in particular to filter elements that are used for holding dust and contaminates in the air and have a relatively coarse upstream-side layer and a relatively fine downstream-side layer.

Japanese Laid-Open Patent Publication No. 2001-523562, corresponding to International Publication WO99/26719, teaches a known filter element. As shown in FIG. 7, a filter element 90 of this publication has an upstream-side, non-woven fabric layer 92, and a downstream-side, filter paper layer 94. In this filter element 90, the filtration ability is configured such that the filtration ability increases in a direction toward the downstream-side Thus, the upstream-side non-fabric layer 92 is more coarse than the downstream-side filter paper layer 94. Therefore, the non-fabric layer 92 can hold dust particles having a relatively large diameter, while the paper filter layer 94 can hold dust particles having a relatively small diameter. In the example of this publication, the weight per unit area of the non-fabric layer 92 is determined to be within a range between 15g/m² and 150g/m². The weight per unit area of the filter paper layer 94 is determined to be within a range between 50g/m² and 200g/m².

In order to improve the dust-holding (i.e., filtering) ability of the upstream-side non-woven fabric layer 92, the mesh of the upstream-side non-woven fabric 92 of the filter element 90 may be configured as a finer mesh. However, with this configuration, the non-fabric layer 92 may become clogged earlier than the downstream-side paper filter layer 94. When this occurs, no more use of the filter is possible even though the paper filter layer 94 may still be sufficient enough for further use. Therefore, the total dust-holding ability of the filter may be reduced.

If the mesh of the upstream-side no-woven fabric layer 92 is set to be coarser in order to avoid potential clogging, the amount of dust that can be held by the non-woven fabric layer 92 may be reduced. As a result, the total available holding amount of dust by the filter may be reduced.

It is accordingly an object of the present invention to teach improved techniques for increasing the total available dust-holding amount of a filter element while effectively utilizing the dust-holding abilities of the upstream-side filter layer and the downstream-side filter layer of the filter element.

According to one aspect of the present teachings, filter elements are taught for holding dust in the air. The filter elements may include an upstream-side filter layer and a downstream-side filter layer. The upstream-side filter layer may be bonded to the downstream-side filter layer and has a coarser mesh than the mesh of the downstream-side filter layer. The upstream-side filter layer has a plurality of through-holes formed therein and extending throughout the thickness of the upstream-side filter layer.

With this arrangement, in addition to the air being filtered by the upstream-side filter layer, the portion of the air (e.g., ambient air) that flows through the through-holes of the upstream-side filter layer may reach the downstream-side filter layer. Therefore, even in the event that dust or other contaminants in the air has clogged the upstream-side filter layer during a long time period of use, the downstream-side filter layer may still filter the air flowing though the through-holes. As a result, this may reduce the occurrence of the problem of a filter element no longer able to be used even though the downstream-side filter element is still usable for filtration.

In addition, it is not necessary to form an upstream-side filter layer having a mesh that is needlessly coarse in order to avoid the clogging of the upstream-side filter layer. Therefore, the upstream-side filter layer may have an improved dust-holding ability.

Because the dust-holding abilities of both of the upstream-side filter layer and the downstream-side filter layer can be effectively utilized, the available dust-holding capacity (i.e., amount) of the entire filter element can be increased.

In one embodiment, the through-holes have an average diameter of approximately 1 mm to 5 mm. A ratio of the total of the open areas of the through-holes to an effective filtration area of the downstream-side filter layer is set to be in the range of approximately 5 % to 20%.

Due to the setting of the open ratio to be smaller than 20%, a reduction in the available dust-holding capacity of the upstream-side filter element may be minimized. In addition, setting the open ratio to be greater than 5% allows the air to be smoothly delivered to the downstream-side filter layer even after the upstream-side filter layer has become clogged.

In another embodiment, the upstream-side filter layer is formed by a non-woven fabric having a weight per unit area of 3 g/m² to 20 g/m². The non-woven fabric is made of fibers having an average diameter of 5 µm to 10 µm.

Therefore, the upstream-side filter layer may have a mesh that is proper for ensuring the dust-holding ability of the upstream-side filter layer.

In a further embodiment, a filter paper or a non-woven fabric forms the downstream-side filter layer. For example, the filter paper may have filtration pores with an average diameter of 25 µm to 45 µm.

In a still further embodiment, the through-holes are distributed equidistantly from each other within the plane of the upstream-side filter layer.

In a still further embodiment, the upstream-side filter layer and the downstream-side filter layer are directly bonded to each other without any additional bonding agent. In the case that a non-woven fabric and a filter paper respectively form the upstream-side filter layer and the downstream-side filter layer, fibers may be formed into the non-woven fabric as the fibers are directly applied onto the filter paper. Preferably, the fibers fall in a semi-melted state onto the filter paper. The fibers contacting the filter paper are bonded to the filter paper as the fibers solidify.

Additional objects, features, and advantages, of the present invention will be readily understood after reading the following detailed description together with the claims and the accompanying drawings, in which:
FIG. 1 is a vertical cross-sectional view of a part of a filter element according to an embodiment of the present invention; and
FIG. 2 is a plan view of a part of the filter element showing an arrangement of through holes of an upstream-side filter layer; and
FIG. 3 is a sectional view similar to FIG. 1 but showing the diffusion of air into a downstream-side filter layer; and
FIG. 4 is a graph showing the relationship between an open ratio of the upstream-side filter layer and the dust-holding amount; and
FIG. 5(A) is a table showing samples of filter elements having differing open ratios and through-hole diameters; and
FIG. 5(B) is a graph showing the correlation between the open ratio and the through-hole diameter of the upstream-side filter layer and the dust-holding amount; and
FIG. 6 is a schematic, side elevation view of an apparatus for manufacturing the upstream-side filter layer; and
FIG. 7 is a vertical sectional view of a part of a known filter element.

Each of the additional features and teachings disclosed above and below may be utilized separately or in conjunction with other features and teachings to provide improved filter elements and methods and apparatus for producing filter elements. Representative examples of the present invention, which examples utilize many of these additional features and teachings both separately and in conjunction with one another, will now be described in detail with reference to the attached drawings. This detailed description is merely intended to teach a person of skill in the art further details for practicing preferred aspects of the present teachings and is not intended to limit the scope of the invention. Only the claims define the scope of the claimed invention. Therefore, combinations of features and steps disclosed in the following detailed description may not be necessary to practice the invention in the broadest sense, and are instead taught merely to particularly describe representative examples of the invention. Moreover, various features of the representative examples and the dependent claims may be combined in ways that are not specifically enumerated in order to provide additional useful embodiments of the present teachings.

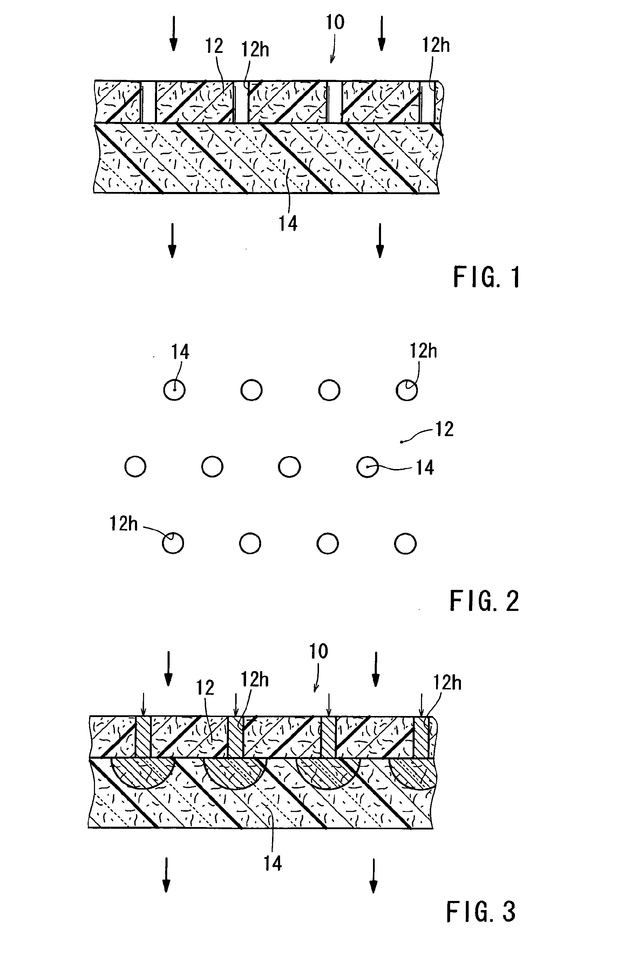

A representative embodiment of the present invention will now be described with reference to FIGS. 1 to 6. Referring to FIG. 1, a representative filter element 10 is designed for use with an air filter and has an upstream-side filter layer 12 and a downstream-side filter layer 14. The upstream-side filter layer 12 is made of non-woven fabric and is adapted to hold dust and other contaminants in the air that have relatively large diameters. For this purpose, the mesh of the upstream-side filter layer 12 is set to be coarser than the mesh of the downstream-side filter layer 14.

As shown in FIG. 2, a plurality of through-holes 12h are formed in the upstream-side filter layer 12 and are distributed to be approximately equidistantly spaced from each other. The diameter of each of the through-holes 12h may be within a range of between 1 mm and 5 mm, such that the ratio of the total open area of the through-holes 12h to an effective filtration area of the downstream-side filter element 14 (hereinafter called "open ratio") is within a range of between 5 % and 20%.

The non-woven fabric of the upstream side filter layer 12 may be formed by thermoplastic resin fibers produced by a melt-blown process that will be explained later.

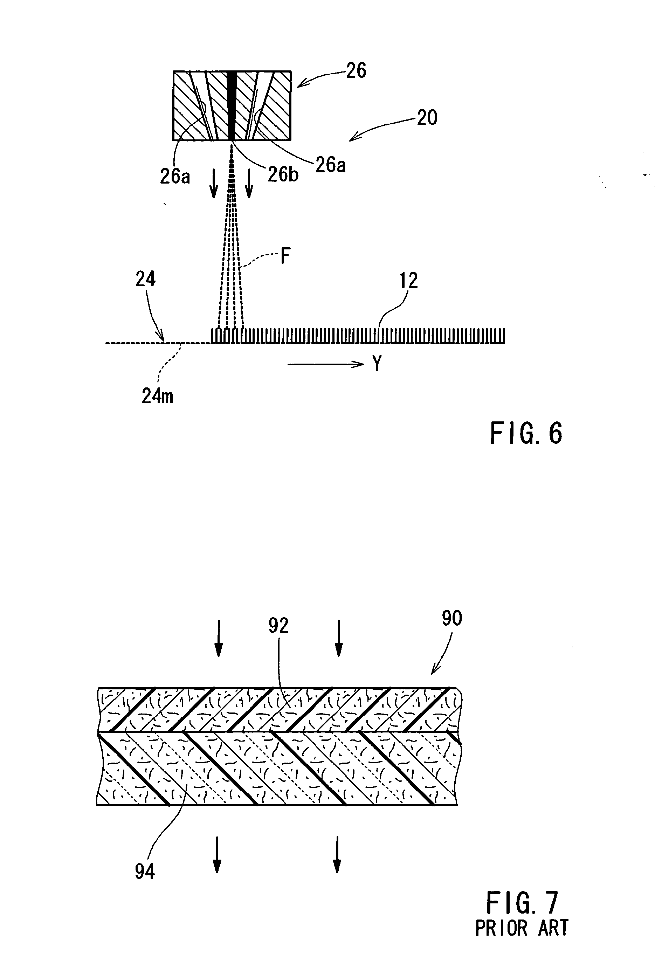

A manufacturing apparatus 20, for manufacturing the non-woven fabric of the upstream-side filter layer 12, is schematically shown by a side elevation view in FIG. 6. The manufacturing apparatus 20 includes a conveyor 24 that extends along a Y-direction. A beltlike base fabric 24m is laid horizontally on the conveyor 24. Preferably, the base fabric 24m may be made of a meshed air-permeable fabric and is adapted to receive fibers F in a semi-melted or a semi-solid state. The fibers F are sprayed from a spinning nozzle 26. Therefore, the fibers F may fall onto the base fabric 24m to be laid thereon to a predetermined thickness as the conveyer 24 moves in the Y-direction.

The spinning nozzle 26 is positioned at a predetermined level above the base fabric 24m and is oriented downward. The spinning nozzle 26 is designed to produce the fibers F by a melt-blown process. More specifically, hot air may be blown out of the hot-air discharge holes 26a of the spinning nozzle 26, against the melted resin that is ejected as the resin fibers F from a central resin ejection hole 26b of the spinning nozzle 26. The resin fibers F are blown by the hot air and may fall onto the base fabric 24m while the resin fibers F are still in a semi-melted state. Each of the resin fibers F may contact with other resin fibers F and may be bonded thereto at the contact points. As a result, the bonded resin fibers F may form a non-woven fabric.

The diameter of the resin fibers F constituting the upstream-side filter layer 12 may be determined as desired by adjusting the flow rate of the resin from the resin ejection hole 26b, and/or by adjusting the flow rate of the hot air blown out of the hot-air discharge holes 26a. In this representative embodiment, the diameter (i.e., average diameter) of the resin fibers F is set to be within a range of between 5 µm and 10 µm.

The weight per unit area of the non-woven fabric of the upstream-side filter layer 12 may also be determined as desired by adjusting the transferring speed of the conveyor 24. Thus, as the speed of the conveyor 24 decreases, the amount of fibers F laid on the base fabric 24m may increase, resulting in the increase of the weight per unit area of the non-woven fabric. On the contrary, as the speed of the conveyor 24 increases, the amount of fibers F laid on the base fabric 24m may decrease, resulting in the decrease of the weight per unit area of the non-woven fabric. In this representative embodiment, the weight per unit area of the non-woven fabric of the upstream-side filter layer 12 is set to be within a range of between 3 g/m² and 20 g/m².

After the non-woven fabric has been thus manufactured, the through-holes 12h of the upstream-side filter layer 12 may be formed by vertically sticking heated needles through the non-woven fabric, or cutting the non-woven fabric by circular blades or the like at a normal temperature.

The downstream-side filter layer 14 may be formed by a filter paper and may serve to hold relatively small sized dust that has passed through the non-woven fabric of the upstream-side filter layer 12, and to hold dust that has traveled through the through-holes 12h. Therefore, the mesh of the filter paper of the downstream-side filter layer 14 is configured to be finer than the mesh of the upstream-side filter layer 12. Preferably, the filter paper of the downstream-side filter layer 14 has filtration pores having an average diameter of between 25 µm and 45 µm.

The non-woven fabric constituting the upstream-side filter layer 12 and the filter paper constituting the downstream-side filter layer 14 are joined together by an appropriate process, such as an embossing process and a lamination process. For example, clamping the non-woven fabric and the filter paper between the upper and lower members, one of which has small projections that are heated for partly fusing the non-woven fabric, may perform the embossing process. Thus, as the small projections stick into the non-woven fabric, the non-woven fabric may be bonded to the filter paper at the fused portions of the non-woven fabric. Placing an air-permeable hot melt sheet between the non-woven fabric and the filter paper may be done to perform a laminating process. By heating and pressing the non-woven fabric together with the filter paper, the non-woven fabric and the filter paper may be bonded together by the hot melt sheet.

The operation of the representative filter element 10 will now be described with reference to FIG. 3. Ambient air may first flow through the upstream-side filter layer 12, and then may further flow though the downstream-side filter layer 14. The ambient air may thereafter be brought to a predetermined location. Before filtration by the filter element 10, the ambient air may contain dust having diameters of less than a few hundred µm. The upstream-side filter layer 12 may hold the dust having relatively large diameters. In addition, the downstream-side filter layer 14 may hold the remaining dust having relatively small diameters.

In addition, a part of the ambient air may directly reach the downstream-side filter layer 14 through the through-holes 12h of the upstream-side filter layer 12. The downstream-side filter layer 14 may then filter this part of the ambient air before the filtered air is brought to a predetermined site.

If the non-woven fabric of the upstream-side filter layer 12 becomes clogged as a result of the filter element being used for a long time period, the ambient air may flow through the through-holes 12h of the upstream-side filter layer 12. The downstream-side filter layer 14 may then filter the ambient air, as long as the downstream-side filter layer 14 still has some filtration ability. The air reaching the downstream-side filter layer 14 through the through-holes 12h may enter directly opposing portions of the downstream-side filter element 14, where the through-holes 12h are directly opposed to the downstream-side filter element 14. The air also may diffuse into the surrounding portions that surround the directly opposing portions of the downstream-side filter layer 14 and are positioned on the backside of the non-woven fabric, as indicated by the narrow cross-hatchings in FIG. 3. Thus, the air may be filtered by flowing linearly through the directly opposing portions and also by diffusing into the surrounding portions.

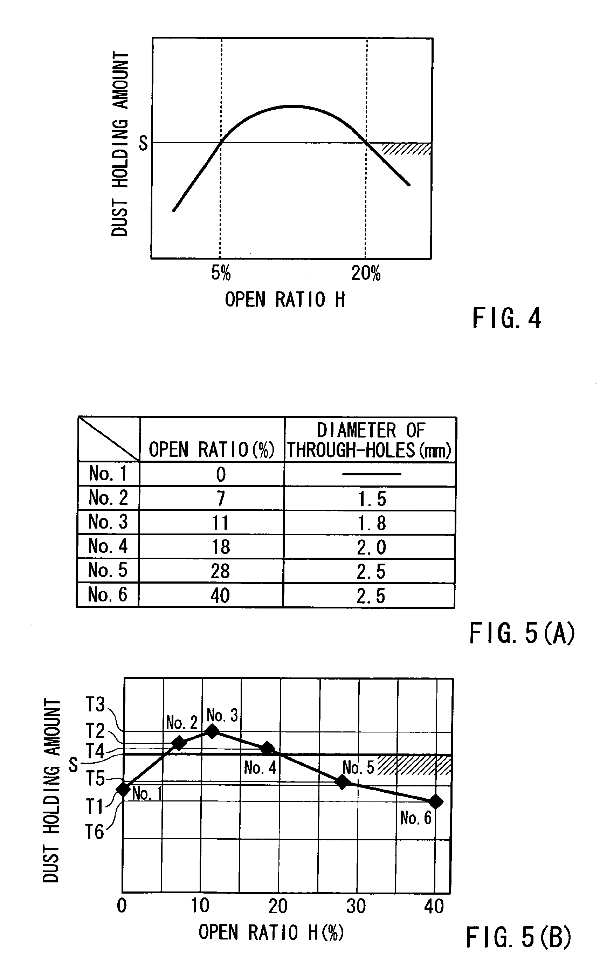

The relationship between the open ratio H and the amount of dust held by the filter element 10 is shown by the graph in FIG. 4. Here the open ratio H is a ratio of the total amount of the open areas of the through holes 12h to the effective filtration area of the downstream-side filter layer 14. The "S" line indicates a reference level dust-holding amount. As will be seen from FIG. 4, the dust-holding amount becomes smaller than the reference amount S as the open ratio H becomes smaller than 5%. Presumably, if the open ration H is smaller than 5%, the through-holes 12h may not effectively deliver the ambient air to the downstream-side filter layer 14 in the event that the upstream-side filter layer 12 has become clogged. Therefore, the dust-holding ability of the downstream-side filter layer 14 may not be effectively utilized. The dust-holding amount also becomes smaller than the reference amount S as the open ratio H becomes greater than 20%. Presumably, this may be caused because the dust-holding ability of the upstream-side filter layer 12 is lowered by the presence of the through-holes 12h.

Therefore, in this representative embodiment, the open ratio H of the filter element 10 is set to be within a range of between 5% and 20% (5% < H < 20%).

The correlation between the open ratio H and the average diameter of the through-holes 12h, and the dust-holding amount of the filter element 10, is shown by a graph in FIG. 5(B). This correlation has been obtained from Sample Nos. 1 to 6 of the filter element 10 as shown by the table in FIG. 5(A).

Sample No. 1 has an open ratio H of 0% (i.e., having no through-holes 12h) as shown in FIG. 5(A). This results in a dust-holding amount T1 (T1 < S) as indicated by ◆ No. 1 in FIG. 5(B).

Sample No. 2 has an open ratio H of 7% with through-holes 12h having an average diameter of 1.5 mm, as shown in FIG. 5(A). Consequently, sample No. 2 has a dust-holding amount T2 (T2 > S) as indicated by ◆ No. 2 in FIG. 5(B).

Sample No. 3 has an open ratio H of 11 % with through-holes 12h having an average diameter of 1.8 mm, as shown in FIG. 5(A). As a result, sample No. 3 has a dust-holding amount T3 (T3 > T2 > S) as indicated by ◆ No. 3 in FIG. 5(B).

Sample No. 4 has an open ratio H of 18% with through-holes 12h having an average diameter of 2.0 mm, as shown in FIG. 5(A). This results in a dust-holding amount T4 (T2 > T4 > S) as indicated by ◆ No. 4 in FIG. 5(B).

Sample No. 5 has an open ratio H of 28% with through-holes 12h having an average diameter of 2.5 mm, as shown in FIG. 5(A). Sample No. 5 has a dust-holding amount T5 (T5 < S) as indicated by ◆ No. 5 in FIG. 5(B).

Sample No. 6 has an open ratio H of 40% with through-holes 12h having an average diameter of 2.5 mm, as shown in FIG. 5(A). Sample No. 6 has a dust-holding amount T6 (T6 < T5 < S) as indicated by◆ No. 6 in FIG. 5(B).

As a result, it has been found that a dust collecting amount greater than the reference amount S may be achieved if the open ratio H is greater than 5% but smaller than 20 % (5% < H < 20%) with the condition that the average diameter of the through-holes 12h is between 1 mm and 5 mm (e.g., preferably between 1.5 mm and 2.0 mm).

As described above, according to the representative filter element 10, not only may the downstream-side filter layer 14 receive not the flow of the air filtered by the upstream-side filter layer 12, but also receives the direct flow of the ambient air through the through-holes 12h. Therefore, even in the event that the upstream-side filter layer 12 has been clogged by dust, the downstream-side filter layer 14 may filtrate ambient air. As a result, and in contrast to the known filter elements, if the downstream-side filter layer 14 still has filtration ability, the filter element 10 does not result in the problem that the filter element 10 can no longer be used.

In addition, it is not necessary to form the upstream-side filter layer 12 to have a mesh that is needlessly coarse in order to avoid clogging of the upstream-side filter layer 12. Therefore, the upstream-side filter layer 12 may have an improved dust-holding ability.

Because the dust-holding abilities of both of the upstream-side filter layer 12 and the downstream-side filter layer 14 can be effectively utilized, the available dust-holding amount of the entire filter element 10 can be increased.

Further, according to the representative embodiment, the average diameter of the through-holes 12h is set within a range of between 1 mm and 5 mm. The open ratio H is set within a range of between 5% and 20%. Therefore, the reduction in the available dust-holding amount by the upstream-side filter element 12 may be minimized, due at least in part to the configuration of the open ratio H of smaller than 20%. In addition, the ambient air may be smoothly delivered to the downstream-side filter layer 14 even in the event that the upstream-side filter layer 12 has clogged, due at least in part to the configuration of the open ratio H of greater than 5%.

Furthermore, according to the representative embodiment, the upstream-side filter layer 12 is made of a non-woven fabric. The non-woven fabric may have a weight per unit area of 3 g/m² to 20 g/m² and is formed by fibers having an average diameter of 5 µm to 10 µm. Therefore, the upstream-side filter layer 12 may have a mesh that is proper for ensuring the dust-holding ability of the upstream-side filter layer 12.

Still furthermore, the air permeability of the filter element 10 may be improved because the upstream-side filter layer 12 has a plurality of through-holes 12h.

Although the upstream-side filter layer 12 and the downstream-side filter layer 14 of the filter element 10 of the above representative embodiment are bonded together by an embossing process or a laminating process, any other type of bonding techniques can be used. For example, the upstream-side filter layer 12 may be directly bonded to the downstream-side filter layer 14 by having the downstream-side filter layer 14 directly receive the fibers F from the spinning nozzle 26. This results in the non-woven fabric being directly formed on the downstream-side filter layer 14.

In addition, although filter paper is used as the downstream-side filter layer 14 in the above representative embodiment, filter paper may be replaced with a non-woven fabric having a fine mesh, e.g., with filtration pores having an average diameter of 20 µm to 90 µm.

## Claims

1. A filter element (10) for removing dust and contaminants from the air, comprising:
an upstream-side filter layer (12); and
a downstream-side filter layer (14) attached to the upstream-side filter layer (12),
wherein an upstream-side filter layer mesh is more coarse than a downstream-side filter layer mesh;
wherein the upstream-side filter layer (12) has a plurality of through-holes (12h) formed therein and extending throughout the thickness of the upstream-side filter layer (12).

2. The filter element (10) as in claim 1,
wherein an open area of each of the plurality of through-holes (12h) has an average diameter within a range of 1 mm to 5 mm; and
wherein a ratio (H) of a cumulative total of the open areas of each of the plurality of through holes (12h) to an effective filtration area of the downstream-side filter layer (14) is within a range of approximately 5% to 20%.

3. The filter element (10) as in claim 1 or 2,
wherein the upstream-side filter layer (12) comprises a non-woven fabric having a weight per unit area within a range of approximately 3 g/m² to 20 g/m²; and
wherein the non-woven fabric is made of fibers (F) having an average diameter within a range of approximately 5 µm to 10 µm.

4. The filter element (10) as in any one of the preceding claims,
wherein the downstream-side filter layer (14) comprises a filter paper.

5. The filter element (10) as in any one of the preceding claims,
wherein each of the plurality of through-holes (12h) are distributed approximately equidistantly from each other within a plane defining the upstream-side filter layer (12).

6. The filter element (10) as in claim 4,

7. The filter element (10) as in any one of the preceding claims,
wherein the upstream-side filter layer (12) and the downstream-side filter layer (14) are directly bonded to each other without any additional bonding agents.

8. The filter element (10) as in claim 7,
wherein the upstream-side filter layer (12) comprises a non-woven fabric made of fibers (F); and
wherein the downstream-side filter layer (14) comprises a filter paper; and
wherein the fibers (F) are formed into the non-woven fabric as the fibers (F) fall directly onto the filter paper.

9. The filter element (10) as in claim 8,
wherein the fibers (F) fall in a semi-melted state onto the filter paper, so that the fibers (F) contacting the filter paper are bonded to the filter paper as the fibers (F) solidify.

10. The filter element (10) as in any one of the preceding claims,
wherein the downstream-side filter layer (14) has a greater weight per unit area than the upstream-side filter layer (12).

11. The filter element (10) as in any one of claims 1 to 6, wherein the filter element (10) further comprises a hot melt sheet, and
wherein the upstream-side filter layer (12) is laminated onto the downstream-side filter layer (14) via the hot melt sheet.

12. The filter element (10) as in any one of claims 1 to 7, wherein the upstream-side filter layer (12) is embossed onto the downstream-side filter layer (14).
